# EUROPEAN PATENT APPLICATION

(11) **EP 2 500 876 A2**
(43) Date of publication of application: **19.09.2012**
(21) Application number: 12158226.6
(22) Date of filing: 06.03.2012
(51) Int. Cl.: G07F 7/10

(54) **IC card, portable electronic device, IC card issuing apparatus, and communication method**

(30) Priority: 17.03.2011 JP 2011059825
(71) Applicant: Kabushiki Kaisha Toshiba, Tokyo 105-8001 (JP)
(72) Inventor: Kishimoto, Ariyuki, Tokyo, 105-8001 (JP)
(74) Representative: HOFFMANN EITLE

(57) **Abstract**

According to one embodiment, an IC card includes a storage unit (205), a receiving unit (21, 201), and an executing unit (204). The storage unit is configured to store first information to execute first processing corresponding to a first command, second information to execute second processing corresponding to a second command, and third information to execute the first processing and the second processing in order on the basis of the first information and the second information in accordance with a batch processing command. The receiving unit is configured to receive the batch processing command. The executing unit is configured to execute the first processing with reference to the first information on the basis of the third information and to execute the second processing with reference to the second information on the basis of the third information, in response to the reception of the batch processing command.

## Description

### FIELD

Embodiments described herein relate generally to an IC card (a smartcard), a portable electronic device, an IC card (a smartcard) issuing apparatus, and a communication method.

### BACKGROUND

In recent years, portable electronic devices (communication media) referred to as IC cards (smartcards) have remarkably spread. For example, the IC cards are used not only for the settlement of credit cards, commuter passes, passports, driver licenses and other transactions but also for various fields as ID cards such as staff member cards, club member cards and insurance cards.

The IC card contains therein an integrated circuit (IC) chip including a nonvolatile data memory and a control element such as a CPU. Moreover, an IC card processing apparatus such as an IC card reader/writer transmits a read command to the IC card and reads data from the IC card, and transmits a write command to the IC card and writes data in the IC card.

When items of processing corresponding to commands are requested with respect to the IC card, the IC card processing apparatus transmits the first command to the IC card, waits for a response corresponding to the first command, receives the response corresponding to the first command, transmits the next command, waits for a response corresponding to the next command, and then receives the response corresponding to the next command. In consequence, when the items of processing corresponding to the commands are executed, a processing time becomes comparatively long.

### BRIEF DESCRIPTION OF THE DRAWINGS

FIG. 1 is a block diagram showing a schematic constitution of an IC card system according to first to third embodiments;
FIG. 2 is a block diagram showing a schematic constitution of a card reader/writer according to the first to third embodiments;
FIG. 3 is a block diagram showing a schematic constitution of an IC card according to the first to third embodiments;
FIG. 4 is a diagram showing an example of a command message of a macro call command (a batch processing command);
FIG. 5 is a diagram showing an example of a data structure of a macro stored (registered) in the IC card;
FIG. 6 is a diagram showing an example of a data structure of processing object data stored in the IC card;
FIG. 7 is a diagram showing an example of the macro call command;
FIG. 8 is a diagram showing an example of the execution of the macro in accordance with the macro call command;
FIG. 9 is a diagram showing a first example of response information with respect to the macro call command;
FIG. 10 is a diagram showing a second example of the response information with respect to the macro call command; and
FIG. 11 is a diagram showing a third example of the response information with respect to the macro call command.

### DETAILED DESCRIPTION

In general, according to one embodiment, an IC card includes a storage unit, a receiving unit, an executing unit, and a transmitting unit. The storage unit is configured to store first information to execute first processing corresponding to a first command, second information to execute second processing corresponding to a second command, and third information to execute the first processing and the second processing in order on the basis of the first information and the second information in accordance with a batch processing command. The receiving unit is configured to receive the batch processing command. The executing unit is configured to execute the first processing with reference to the first information on the basis of the third information and to execute the second processing with reference to the second information on the basis of the third information, in response to the reception of the batch processing command. The transmitting unit is configured to transmit a response including first execution result information indicating the execution result of the first processing, and second execution result information indicating the execution result of the second processing.

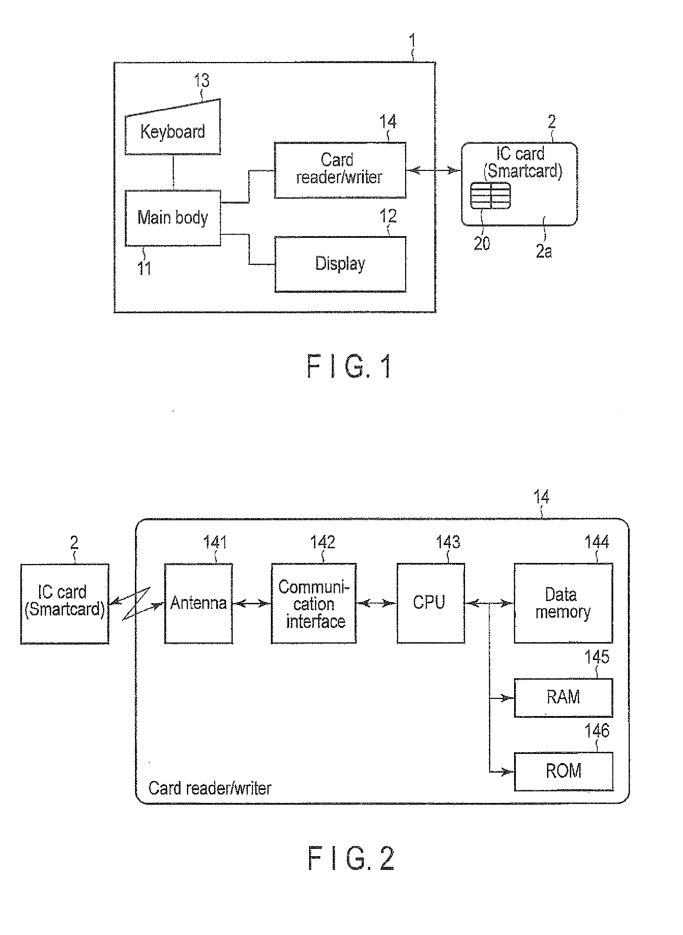

FIG. 1 is a block diagram showing a schematic constitution of an IC card system (alias, a smart card system) of first to third embodiments. As shown in FIG. 1, the IC card system is constituted of a terminal 1 (a communication apparatus) and an IC card 2 (corresponding to a portable electronic device or a communication medium). The terminal 1 includes a main body (a higher level device) 11, a display 12, a keyboard 13 and a card reader/writer 14. The terminal 1 can communicate with the IC card 2. The terminal 1 transmits data to the IC card 2, and receives the data from the IC card 2.

The main body 11 can selectively execute communication systems and applications. The display 12 displays communication results, authentication results and the like with the IC card 2. The keyboard 13 inputs characters, numerals and the like into the main body 11. The card reader/writer 14 communicates with the IC card 2.

It is to be noted that in the first to third embodiments, there will be described a case where the IC card 2 is a contactless-type card. However, the IC card 2 may be a contact type card or a combination type card which supports both the contactless type and the contact type.

FIG. 2 is a block diagram showing a schematic constitution of the card reader/writer 14 according to the first to third embodiments. As shown in FIG. 2, the card reader/writer 14 includes an antenna 141, a communication interface 142, a CPU 143, a data memory 144, a RAM 145, and a ROM 146. The CPU 143 controls the transmission of commands to the IC card 2.

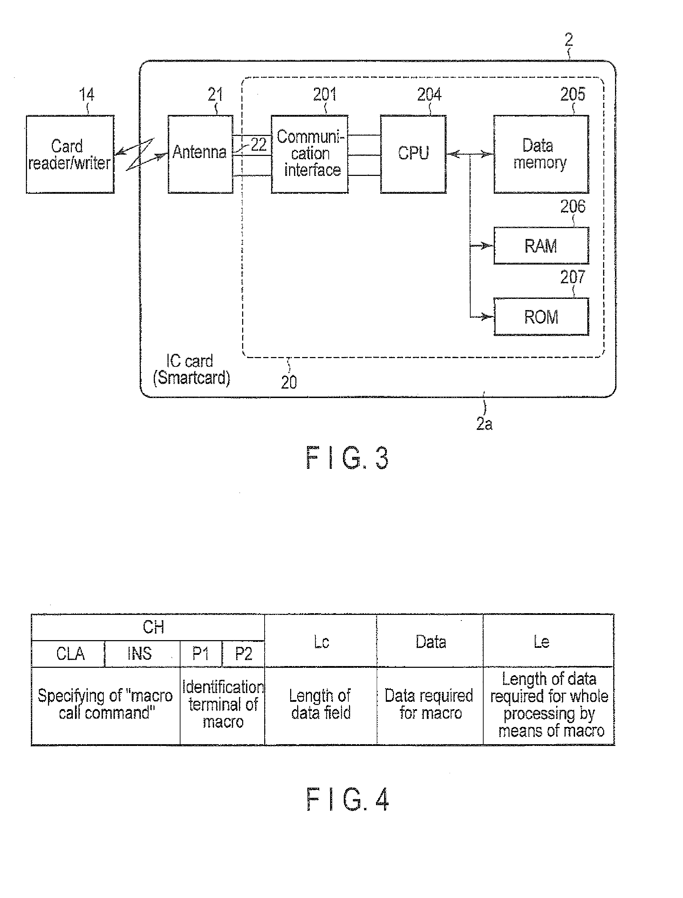

FIG. 3 is a block diagram showing a schematic constitution of the IC card according to the first to third embodiments. As shown in FIG. 3, the IC card 2 is constituted of, for example, a plastic card (a base material) 2a, and includes an IC chip 20 (an IC module). The IC chip 20 includes a communication interface 201, a CPU 204, a data memory (a nonvolatile memory) 205, a RAM 206, and a ROM 207. Furthermore, as shown in FIG. 3, the IC card 2 includes an antenna 21. The CPU 204 functions as an executing unit which executes, for example, processing corresponding to the command. That is, the CPU 204 interprets the command transmitted from the terminal 1, executes the processing corresponding to the command, and controls the returning of a command execution result (a response) to the terminal 1.

Hereinafter, batch processing by the above-mentioned IC card system will be described.

### (First Embodiment)

FIG. 4 is a diagram showing an example of a command message of a macro call command (a batch processing command). The macro call command is a command message for calling commands (hereinafter referred to as the macro) formed by arranging and registering, in order of execution, the commands stored in the data memory 205 of the IC card 2.

A format of this command message is determined by ISO/IEC 7816-4, and is constituted of a class byte (CLA), an instruction byte (INS), a parameter byte (P1), a parameter byte (P2), Lc, Data, and Le. CLA and INS specify the use of "the macro call command", and P1 and P2 specify an identifier of the macro to be called. Moreover, Lc is called the Lc field, Data is called the Data field, and Le is called the Le field. The Data field includes information for specifying data required for the macro. The Lc field includes information for specifying a length of the Data field. It is to be noted that a macro which does not require any items of data is also present. In this case, Lc and Data can be omitted. The Le field includes information indicating a data length of the data required for the whole processing by the macro in the IC card 2.

It is to be noted that in ISO/IEC 7816-4:2005, four bytes of CLA-INS-P1-P2 are defined as "a command header".

Next, an example of processing to read items of data by use of "the macro call command" will be described. That is, there will be described an example of processing to execute items of processing (e.g., the reading of the data) corresponding to the commands in order, by use of "the macro call command".

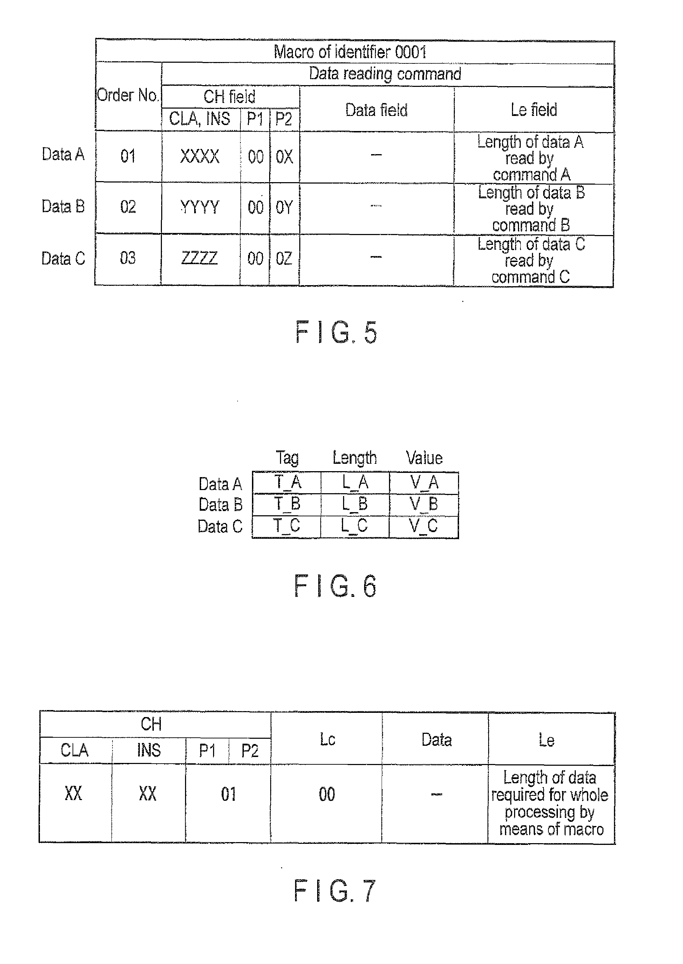

FIG. 5 is a diagram showing an example of a data structure of the macro stored (registered) in the IC card 2. Here, there will be described a case where the macro specifies process A corresponding to command A, process B corresponding to command B and process C corresponding to command C in order. For example, in the data memory 205, there are stored information A to execute process A corresponding to command A, information B to execute process B corresponding to command B, and information C to execute process C corresponding to command C. The macro shown in FIG. 5 is information to execute process A, process B and process C in order on the basis of information A, information B and information C in accordance with the macro call command. For example, the macro is information to execute three data reading commands (commands A, B and C) and to read three types of data.

When the communication interface 201 (a receiving unit) of the IC card 2 receives the macro call command, the CPU 204 of the IC card 2 detects identification information (e.g., 0001) assigned to the macro shown in FIG. 5 from identification information (e.g., 0001) of the macro call command, to execute the macro shown in FIG. 5. That is, the CPU 204 executes three data reading commands (commands A, B and C) in a command, execution order set to the macro, in accordance with the execution of the macro. That is, the CPU 204 first executes the processing to read data A corresponding to command A, executes the processing to read data B corresponding to command B, and then executes the processing to read data C corresponding to command C.

For example, P1 and P2 of a CH field of command A specify data A, P1 and P2 of a CH field of command B specify data B, and P1 and P2 of a CH field of command C specify data C. It is to be noted that any items of data are not set to Data fields of commands A, B and C. Moreover, an Le field of command A includes a data length of data A required by command A. An Le field of command B includes a data length of data B required by command B. An Le field of command C includes a data length of data C required by command C.

FIG. 6 is a diagram showing an example of a data structure of the processing object data (data A, data B, and data C) stored in the data memory 205 of the IC card 2. For example, data A stored in the data memory 205 is constituted of Tag (T_A), Length (L_A), and Value (V_A). Similarly, data B stored in the data memory 205 is constituted of Tag (T_B), Length (L_B), and Value (V_B). Similarly, data C stored in the data memory 205 is constituted of Tag (T_C), Length (L_C), and Value (V_C).

Value indicates actual data contents. Tag indicates a data stator. Length indicates a length of Value. P1 and P2 of the macro shown in FIG. 5 specify a value corresponding to Tag shown in FIG. 6. Consequently, each command determines the instruction of the data to be read.

FIG. 7 is a diagram showing an example of the macro call command for using the macro of the identifier 0001. The identifier is specified by P1 and P2 as shown in FIG. 7. Le specifies a data length of the data to be read in the whole processing by the macro. Moreover, when the macro does not require any items of data, Data is not specified.

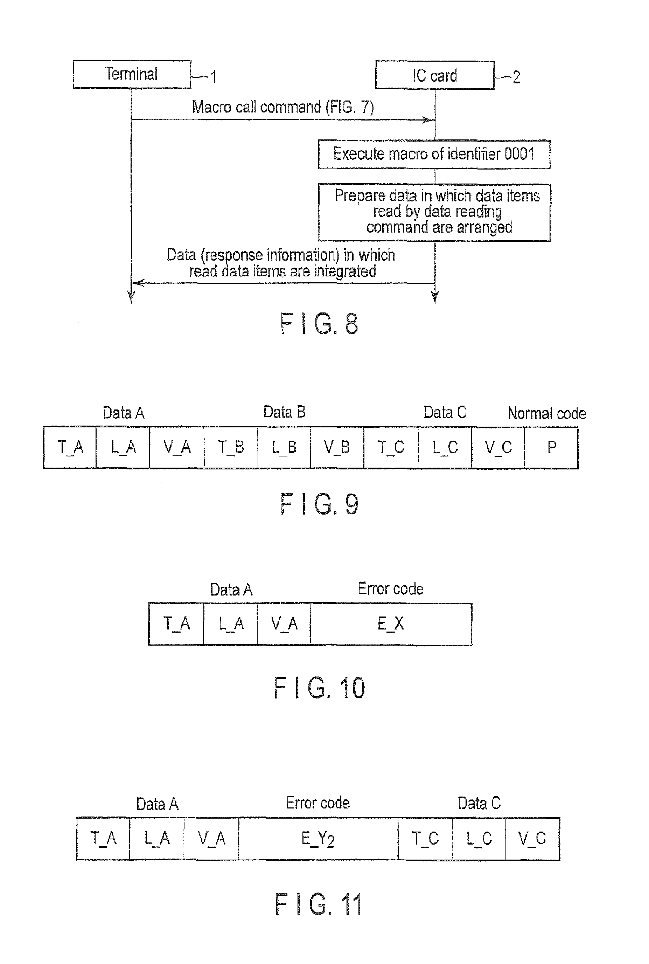

FIG. 8 is a diagram showing an example of processing to call the macro shown in FIG. 5 by use of "the macro call command" shown in FIG. 7, to execute items of processing corresponding to the commands and to read items of data.

The card reader/writer 14 transmits, to the IC card 2, the macro call command shown in FIG. 7. The communication interface 201 of the IC card receives the macro call command, and the CPU 204 detects the identifier 0001 from the macro call command to execute the macro of the identifier 0001 (the macro shown in FIG. 5).

That is, the CPU 204 executes three data reading commands (commands A, B, and C) in the command execution order set to the macro, in accordance with the execution of the macro. That is, the CPU 204 first executes command A, reads data A from the data memory 205, executes command B, reads data B from the data memory 205, executes command C, and then reads data C from the data memory 205.

Furthermore, the CPU 204 generates response information including execution result information A indicating the execution result of process A corresponding to command A, execution result information B indicating the execution result of process B corresponding to command B, and execution result information C indicating the execution result of process C corresponding to command C. That is, the CPU 204 combines the read data A, B and C to generate the response information. The communication interface 201 transmits the response information to the card reader/writer 14.

FIG. 9 is a diagram showing a first example of the response information to the macro call command. As shown in FIG. 9, the response information includes continuous information of data A, data B and data C read on the basis of commands A, B and C. It is to be noted that data A is constituted of Tag (T_A), Length (L_A) and Value (V_A), data B is constituted of Tag (T_B), Length (L_B) and Value (V_B), and data C is constituted of Tag (T_C), Length (L_C) and Value (V_C). Therefore, data A, data B and data C included in the response information can easily be distinguished.

Furthermore, when the whole processing by means of the macro is normal (process A, process B and process C corresponding to commands A, B and C are normal), the response information includes a normal code (P). For example, the normal code (P) is disposed at the tail of the response information. That is, when the whole processing by means of the macro is normal, the communication interface 201 (a transmitting unit) transmits the response information shown in FIG. 9 to the card reader/writer 14.

### (Second Embodiment)

In the above first embodiment, there has been described the case where when the whole processing by means of the macro is normal, the IC card 2 transmits the response information including the normal code (P). In a second embodiment, there will be described a case where when an abnormality or an error occurs during processing by means of a macro, the IC card 2 interrupts the processing by means of the macro to transmit response information including an error code. It is to be noted that a basic constitution and a basic operation of an IC card system have been described in the first embodiment, and hence an only part different from the first embodiment will mainly be described.

FIG. 10 is a diagram showing a second example of the response information to a macro call command. For example, the CPU 204 executes processing A corresponding to a command A in accordance with the execution of the macro, and then executes processing B corresponding to a command B in response to the normal end of process A (success in the reading of data A). When process B corresponding to command B cannot correctly be executed (failure in the reading of data B), i.e., when the abnormality or the error occurs during the processing by means of the macro, the CPU 204 interrupts the processing by means of the macro (does not execute processing C).

Furthermore, the CPU 204 generates response information by adding an error code to execution result information of the processing which has normally ended prior to the interruption of the processing. For example, as shown in FIG. 10, the CPU 204 generates the response information including execution result information A (data A) corresponding to the normal end of process A, and the error code. That is, when the abnormality or the error occurs during the processing by means of the macro, the CPU 204 interrupts the processing by means of the macro, and the communication interface 201 transmits the response information shown in FIG. 10 to the card reader/writer 14.

### (Third Embodiment)

In the above second embodiment, there has been described the case where when the abnormality or the error occurs during the processing by means of the macro, the IC card 2 interrupts the processing by means of the macro, and transmits the response information including the error code. In a third embodiment, there will be described a case where when the abnormality or the error occurs during the processing by means of the macro, the IC card 2 interrupts partial processing by means of the macro, continues partial processing by means of the macro, and transmits the response information including the error code. It is to be noted that a basic constitution and a basic operation of an IC card system have been described in the first embodiment, and hence an only part different from the first embodiment will mainly be described.

FIG. 11 is a diagram showing a third example of the response information to a macro call command. For example, the CPU 204 executes processing A corresponding to a command A in accordance with the execution of the macro, and then executes processing B corresponding to a command B in response to the normal end of process A (success in the reading of data A). When process B corresponding to command B cannot correctly be executed (failure in the reading of data B), i.e., when the abnormality or the error occurs during the processing by means of the macro, the CPU 204 interrupts process B, and then executes processing C corresponding to a command C. That is, the CPU 204 ignores the processing which cannot be executed, and continues the processing by means of the macro to the last.

Furthermore, the CPU 204 generates response information including execution result information of normally ended processing and an error code corresponding to processing which cannot be executed. For example, as shown in FIG. 11, the CPU 204 generates the response information including execution result information A (data A) corresponding to the normal end of process A, the error code corresponding to the abnormality or the error of process B, and execution result information C (data C) corresponding to the normal end of process C. That is, when the abnormality or the error occurs during the processing by means of the macro, the CPU 204 skips the processing which cannot be executed to continue the processing by means of the macro, and the communication interface 201 transmits, to the card reader/writer 14, the response information shown in FIG. 11 (information by which the normally ended processing and the processing interrupted owing to the occurrence of the error can be distinguished among items of processing).

As shown in FIG. 11, the execution result information A (data A) included in the response information) is constituted of Tag, Length, and Value. Moreover, the execution result information C (data C) included in the response information is also constituted of Tag, Length, and Value. On the other hand, the error code (E_Y2) included in the response information does not include the data structure of Tag, Length and Value, but includes information indicating that the second command B is the error.

Hereinafter, the respective embodiments will be summarized.

As described above, in the IC card system, the batch processing command can be applied. Therefore, it is possible to decrease the number of times to transmit and receive the data for the items of processing corresponding to the commands, and it is also possible to shorten time to wait for the reception of the response information. In consequence, it is possible to speed up the whole command processing.

For example, when the batch processing command is not applied but the items of processing corresponding to the commands are executed, the card reader/writer 14 transmits, to the IC card 2, the first command among the commands (the first command), and the IC card 2 receives this first command, executes the first processing on the basis of the first command, and transmits a first response including a first processing result to the card reader/writer 14. The card reader/writer 14 receives the first response, and then transmits, to the IC card 2, the next command among the commands (a second command). Thus, command batch processing is not applied, but command sequential processing is applied. In this case, when the items of processing corresponding to the commands are executed, the number of the times to transmit and receive the data increases, and the time to wait for the reception of the response information lengthens.

It is to be noted that in the above description, there has been described the case where the data memory 205 of the IC card 2 stores (registers) information A for executing process A corresponding to command A, information B for executing process B corresponding to command B and information C for executing process C corresponding to command C, and the data memory stores (registers) the macro for executing process A, process B and process C in order, on the basis of information A, information B and information C in accordance with the macro call command. However, a storage unit other than the data memory 205 of the IC card 2 may store these information A, information B, information C and macro.

For example, the ROM 207 of the IC card 2 may store information A, information B, information C and macro. That is, it is possible to issue the IC card 2 including the ROM 207 in which information A, information B, information C and macro are registered. Moreover, the ROM 207 of the IC card 2 may store these information A, information B and information C, and the data memory 205 of the IC card 2 may store the macro. That is, the IC card 2 including the ROM 207 in which information A, information B and information C are registered may be issued, and the macro may be registered in the data memory 205 of the IC card 2 in an operation stage of the IC card 2.

Moreover, by an IC card manufacturing method, an IC card manufacturing apparatus manufactures the IC card 2 described above. For example, the IC card manufacturing apparatus manufactures the IC module 20 constituted of the communication interface 201, the CPU 204, the data memory 205, the RAM 206, the ROM 207 and the like, and further manufactures the IC card 2 constituted of the plastic card (the base material) 2a and the IC module 20.

Furthermore, by an IC card issuing method, an IC card issuing apparatus (the terminal 1) issues the IC card 2 described above. For example, the IC card issuing apparatus (the card reader/writer 14 of the terminal 1) writes issuing information in the data memory 205 of the IC card 2 manufactured by the IC card manufacturing apparatus, to issue the IC card. The issuing information is, for example, personal information, and the information stored in the main body 11 or the data memory 144.

According to at least one of the above embodiments, there can be provided an IC card in which it is possible to efficiently execute commands, and a communication method. Moreover, there can be provided an IC card manufacturing method which can manufacture such an IC card. Furthermore, there can be provided an IC card issuing method which can issue such an IC card.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An IC card **characterized by** comprising:
a storage unit (205) configured to store first information to execute first processing corresponding to a first command, second information to execute second processing corresponding to a second command, and third information to execute the first processing and the second processing in order on the basis of the first information and the second information in accordance with a batch processing command;
a receiving unit (21, 201) configured to receive the batch processing command;
an executing unit (204) configured to execute the first processing with reference to the first information on the basis of the third information and to execute the second processing with reference to the second information on the basis of the third information, in response to the reception of the batch processing command; and
a transmitting unit (21, 201) configured to transmit a response including first execution result information indicating the execution result of the first processing, and second execution result information indicating the execution result of the second processing.

2. The IC card of claim 1, **characterized in that**
the storage unit stores the third information including identification information of the batch processing command, and
the executing unit reads the third information from the identification information of the batch processing command executes the first processing with reference to the first information on the basis of the third information, and executes the second processing with reference to the second information on the basis of the third information, in response to the reception of the batch processing command.

3. The IC card of claim 1 or 2, **characterized in that**
the transmitting unit transmits the response including the first execution result information, the second execution result information, and normal end information, in response to the reception of the batch processing command and the normal end of the first processing and the second processing.

4. The IC card of claim 1 or 2, **characterized in that**
the executing unit executes the first processing in response to the reception of the batch processing command, executes the second processing in response to the normal end of the first processing, and interrupts the second processing in response to an error of the second processing, and
the transmitting unit transmits the response including the first execution result information, and error data indicating the error of the second processing.

5. The IC card of claim 1 or 2, **characterized in that**
the executing unit executes the first processing in response to the reception of the batch processing command, interrupts of the first processing in response to an error of the first processing, and executes the second processing, and
the transmitting unit transmits the response including error data indicating the error of the first processing, and the second execution result information.

6. The IC card of one of claims 1 to 5, **characterized by** further comprising an IC module (20) and a base material (2a),
wherein the IC module includes the storage unit, the receiving unit, the executing unit, and the
transmitting unit.

7. A portable electronic device **characterized by** comprising:
a storage unit (205) configured to store first information to execute first processing corresponding to a first command, second information to execute second processing corresponding to a second command, and third information to execute the first processing and the second processing in order on the basis of the first information and the second information in accordance with a batch processing command;
a receiving unit (21, 201) configured to receive the batch processing command;
an executing unit (204) configured to execute the first processing with reference to the first information on the basis of the third information and to execute the second processing with reference to the second information on the basis of the third information, in response to the reception of the batch processing command; and
a transmitting unit (21, 201) configured to transmit a response including first execution result information indicating the execution result of the first processing, and second execution result information indicating the execution result of the second processing.

8. An IC card issuing apparatus **characterized by** comprising:
a writing unit (14) configured to write issuing information in an IC card, wherein
the IC card comprises:
a storage unit (205) configured to store first information to execute first processing corresponding to a first command, second information to execute second processing corresponding to a second command, and third information to execute the first processing and the second processing in order on the basis of the first information and the second information in accordance with a batch processing command;
a receiving unit (21, 201) configured to receive the batch processing command;
an executing unit (204) configured to execute the first processing with reference to the first information on the basis of the third information and to execute the second processing with reference to the second information on the basis of the third information, in response to the reception of the batch processing command; and
a transmitting unit (21, 201) configured to transmit a response including first execution result information indicating the execution result of the first processing, and second execution result information indicating the execution result of the second processing.

9. A communication method **characterized by** comprising:
receiving a batch processing command;
referring to third information, in response to the reception of the batch processing command, from a memory which stores first information to execute first processing corresponding to a first command, second information to execute second processing corresponding to a second command and the third information to execute the first processing and the second processing in order on the basis of the first information and the second information in accordance with the batch processing command, executing the first processing with reference to the first information on the basis of the third information, and executing the second processing with reference to the second information on the basis of the third information; and
transmitting a response including first execution result information indicating the execution result of the first processing, and second execution result information indicating the execution result of the second processing.
